# EUROPÄISCHE PATENTANMELDUNG

(11) **EP 1 589 258 A2**
(43) Veröffentlichungstag der Anmeldung: **26.10.2005**
(21) Anmeldenummer: 05007022.6
(22) Anmeldetag: 31.03.2005
(51) Int. Cl.: F16H 25/18, F16D 23/12

(54) **Differenzgetriebe**

(30) Priorität: 24.04.2004 DE 102004020079
(71) Anmelder: LuK Lamellen und Kupplungsbau Beteiligungs KG, 77815 Bühl (DE)
(72) Erfinder: Braun, Roland, 77728 Oppenau (DE); Hickling, Gregory, 76229 Karlsruhe (DE)

(57) **Zusammenfassung**

Ein Differenzgetriebe, enthält eine Antriebseinrichtung, wenigstens zwei Zwischenglieder (10,12) und ein Abtriebsbauteil (14) wobei sich das Abtriebsbauteil (14) über Schrägflächen (26,28) an den Zwischengliedern abstützt. Bei gedachtem gleichem Antrieb der Zwischenglieder (10,12) mittels der Antriebseinrichtung wird eine erste Bewegung ausgeführt und bei unterschiedlichem Antrieb der Zwischenglieder mittels der Antriebseinrichtung wird eine der ersten überlagerte zweite Bewegung ausgeführt. Das Keildifferenzgetriebe kann als Spindeldifferenzgetriebe mit zwei Muttern für die Betätigung einer Kupplung verwendet werden.

## Beschreibung

Die Erfindung betrifft ein Differenzgetriebe.

In modernen Automobilen werden zunehmend motorisch betätigte Kupplungen und Schaltgetriebe eingesetzt. Bei einer typischen motorischen Kupplungsbetätigung ist der Kolben eines Geberzylinders über seinen Schaft mit einem linear beweglich geführten Stößel verbunden, der über eine verdrehfest geführte Mutter mit einer Spindel in Gewindeeingriff ist. Die Spindel wird von einem Elektromotor über ein Zwischengetriebe drehangetrieben. Eine dermaßen aufgebaute Aktoreinheit ist teuer und verlangt einen großen Bauraum.

Der Erfindung liegt die Aufgabe zugrunde, eine Betätigungsvorrichtung zu schaffen, mit der bei kleinem Bauraum ein hoher Stellwirkungsgrad realisierbar ist und die außerdem einfach herstellbar ist.

Diese Aufgabe wird mit einem Differenzgetriebe gelöst, das enthält eine Antriebseinrichtung, wenigstens zwei Zwischenglieder und ein Abtriebsbauteil, wobei sich das Abtriebsbauteil über Schrägflächen an den Zwischengliedern abstützt, bei gleicher Bewegungsrichtung der Zwischenglieder mittels der Antriebseinheit eine erste Bewegung ausführt und bei unterschiedlicher Geschwindigkeit der Zwischenglieder mittels der Antriebseinrichtung einer der ersten überlagerte zweite Bewegung ausführt.

Bei einem solchen Differenzgetriebe, dessen Antriebseinrichtung beispielsweise einen einzigen Elektromotor enthält, der die Zwischenglieder unterschiedlich antreibt, ist durch Festlegung des Unterschiedes der Antriebe der Zwischenglieder und durch die Wahl der Steigungswinkel der Schrägflächen die Übersetzung festlegbar, mit der die Bewegung der Antriebseinrichtung erfolgt die weiter als Ausgangsgröße zur Verfügung steht.

Das erfindungsgemäße Differenzgetriebe ist in unterschiedlichster Weise aufbaubar und in kleine Bauräume hineinkonstruierbar. Durch geeignete Abstimmung der Schrägflächen ist es selbsthemmend, d.h. eine Kraft auf das Abtriebsbauteil wird nicht auf die Antriebseinrichtung übertragen.

Dabei kann der Antrieb des Differenzgetriebes entweder von mindestens einem Zwischenglied oder von der Antriebseinrichtung selbst ausgehen, was bei ungünstigen Platzverhältnissen von Vorteil ist.

Bei einer Ausführungsform des erfindungsgemäßen Differenzgetriebes, das als Keildifferenzgetriebe bezeichnet werden kann, sind die Zwischenglieder in gleicher Richtung linear beweglich geführt und das Abtriebsbauteil ist über die Schrägflächen an den Zwischengliedern derart abgestützt, dass es einer mit gleicher Geschwindigkeit und in gleicher Richtung erfolgenden Bewegung der Zwischenglieder mit gleicher Geschwindigkeit und Richtung folgt und sich bei ungleicher Geschwindigkeit der sich in gleiche Richtung bewegenden Zwischenglieder mit einer zur Bewegungsrichtung der Zwischenglieder parallelen und einer dazu senkrechten Komponente bewegt und die Antriebseinrichtung derart ausgebildet ist, dass die Zwischenbauteile in gleicher Richtung mit unterschiedlicher Geschwindigkeit bewegbar sind.

Mit Vorteil sind die Schrägflächen der Zwischenglieder symmetrisch zu einer senkrecht auf ihrer Bewegbarkeitsrichtung stehenden Geraden angeordnet. Sie können allerdings ebenso gut asymmetrisch ausgebildet sein und einander zugewandte Keilflächen bilden, an denen entsprechende Schrägflächen des Abtriebbauteils anliegen, so dass sich das Abtriebbauteil bei einer Abstandsänderung der Keilflächen der Zwischenglieder mit einer Komponente senkrecht zu deren Bewegungsrichtung bewegt.

Weiterhin weisen die Zwischenglieder, bezogen auf ihre Bewegbarkeitsrichtung, vorteilhafter Weise nebeneinander angeordnete Eingriffsflächen auf, die mittels der Antriebseinrichtung in gleicher Richtung und mit unterschiedlicher Geschwindigkeit antreibbar sind.

Dabei können die Eingriffsflächen beispielsweise mit unterschiedlichem Durchmesser ausgebildeten Umfangsflächen einer drehantreibbaren Welle in Eingriff sein.

Vorteilhafterweise enthält das erfindungsgemäße Differenzgetriebe ein Abtriebsglied, das die Bewegung des Abtriebsbauteils senkrecht zur Bewegbarkeitsrichtung der Zwischenbauteile abtastet.

Bei einer weiteren Ausführungsform des erfindungsgemäßen Differenzgetriebes, das als Spindeldifferenzgetriebe bezeichnet werden kann, wird das Abtriebsbauteil durch eine um eine Achse drehbar gelagerte und in Achsrichtung bewegliche Spindel mit einem äußeren Spindelgewinde gebildet. Die Zwischenglieder werden durch zwei in axial beabstandete, in ihrer axialen Position festgelegte Muttern mit Innengewinden gebildet, die mit dem Spindelgewinde in Eingriff stehen, und die Antriebseinrichtung (als Koppelement ausgeführt) ist zum Drehantrieb der Muttern ausgebildet, wobei die Gewindeeingriffe zwischen den Muttern und der Spindel und der Drehantrieb der Muttern derart ist, dass sich die Spindel bei gleichem Antrieb durch die Muttern nur dreht und bei ungleichem Antrieb dreht und axial verschiebt.

Das erfindungsgemäße Spindeldifferenzgetriebe weist sowohl unterschiedliche Gängigkeiten in den Muttern als auch in den entsprechenden Bereichen des Spindelgewindes auf. Dabei können die Gewinde in Abhängigkeit der gewünschten Übersetzung sowohl mit gleichen als auch ungleichen Steigungen versehen sein. Dadurch wird die von der Antriebseinrichtung in die Muttern eingeleitete Drehzahl ausgangsseitig entsprechend verändert.

Bei einer bevorzugten Ausführungsform des Spindeldifferenzgetriebes weisen die Muttern unterschiedliche Außendurchmesser auf und sind an ihren äußeren Umfangsflächen mit Verzahnungen versehen, die mit Verzahnungen kämmen, die mit unterschiedlichem Durchmesser am Außenumfang einer Welle ausgebildet sind, wobei die Welle um eine zur Achse der Spindel parallele Achse drehangetrieben ist.

Diese Welle kann beispielsweise auch als Hohlrad ausgeführt sein.

Bevorzugt ist die Spindel hohl und an einem sie durchdringenden, linear beweglich geführten Abtriebsglied drehbar und axial unverschiebbar gehalten.

Das erfindungsgemäße Differenzgetriebe ist in unterschiedlichster Weise einsetzbar. Es eignet sich insbesondere für Anwendungen, bei denen die Drehung eines Motors mit starker Untersetzung in eine Linearbewegung umgesetzt werden soll. Das Differenzgetriebe kann beispielsweise für Schaltelemente einer Getriebeaktorik, für die Kupplungsaktorik oder für Ausrückmechaniken verwendet werden.

Die Erfindung wird im Folgenden anhand schematischer Zeichnungen beispielsweise und mit weiteren Einzelheiten erläutert.

Es stellen dar:
- Fig. 1: eine Seitenansicht eines Keildifferenzgetriebes,
- Fig. 2: eine perspektivische Ansicht des Getriebes gemäß Fig. 1,
- Fig. 3: eine Schnittansicht eines Spindeldifferenzgetriebes und
- Fig. 4: eine Anwendung des Spindeldifferenzgetriebes in einer Kupplungsaktorik.

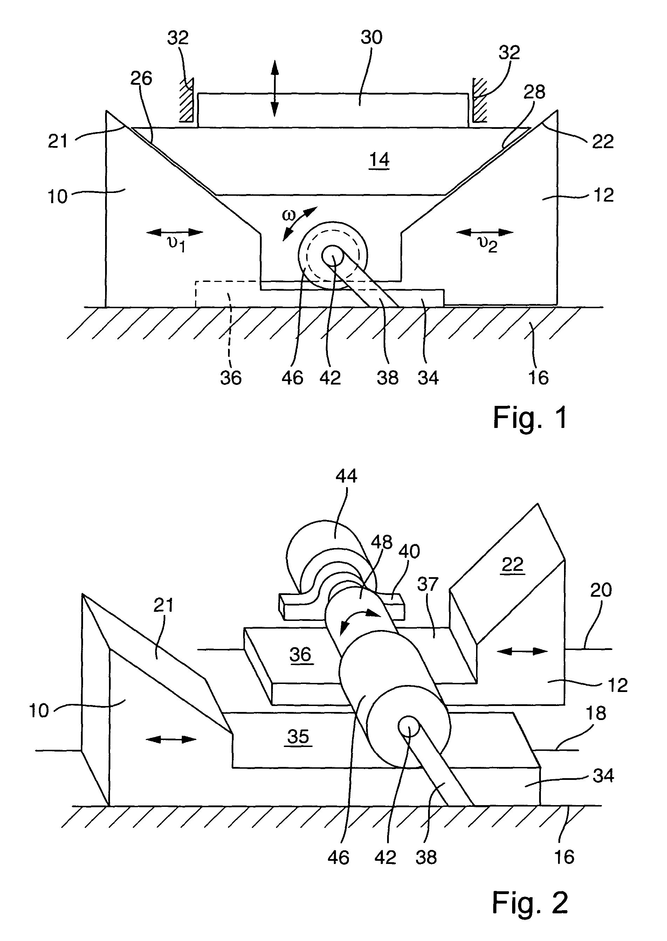

Gemäß den Fig. 1 und 2 enthält ein Keildifferenzgetriebe 2 als Zwischenglieder wirksame Keilbauteile 10 und 12, über die die Drehung eines Elektromotors auf ein Abtriebsbauteil 14 übertragen wird.

Genauer sind die Keilbauteile 10 und 12 an ihren Unterseiten an einer Basis 16, beispielsweise in Fig. 2 angedeuteten Führungen 18 und 20, linear beweglich geführt. Die Keilbauteile 10 und 12 sind mit Schrägflächen 20 und 22 ausgebildet, die entweder symmetrisch oder asymmetrisch zueinander mit gleicher oder ungleicher Steigung ausgebildet sind und sich in einer quer zur Bewegbarkeitsrichtung der Keilbauteile 10 und 12 gerichteten Linie schneiden. Das Abtriebsbauteil 14 ist mit entsprechenden Schrägflächen 26 und 28 ausgebildet, wobei der Abstand der Oberseite des im Querschnitt teilkegeligen Abtriebsbauteil 14 von der Oberseite der Basis 16 sich vergrößert, wenn sich die Schrägflächen 20 und 22 aufeinander zu bewegen. Auf der Oberseite des Abtriebsbauteils liegt ein Abtriebsglied 30 auf, das in basisfesten Führungen 32 im dargestellten Beispiel senkrecht beweglich geführt ist.

Das Keilbauteil 10 weist gemäß Fig. 1 einen nach rechts vorstehenden Ansatz 34 auf, der eine ebene Oberseite 35 aufweist und mit geringerer Höhe ausgebildet ist, als ein entsprechender Ansatz 36 des Keilbauteils 12, dessen Oberseite mit 37 bezeichnet ist. Zum Antrieb der Keilbauteile 10 und 12 ist in basisfesten Konsolen 38 und 40 eine Welle um eine senkrecht auf der Bewegbarkeitsrichtung der Keilbauteile 10 und 12 stehende und parallel zur Oberseite der Basis 16 verlaufende Achse drehbar gelagert. Zum Drehantrieb der Welle 42 dient ein Elektromotor 44.

An der Welle 42 sind drehfest mit ihr verbunden Reibräder 46 und 48 befestigt, wobei der Durchmesser des Reibrades 46 um soviel größer ist als der des Reibrades 48 wie die Dicke des Ansatzes 34 kleiner ist als die des Ansatzes 36. Die Oberflächen der Reibräder sind in Reibeingriff mit den Oberseiten 35, 37 der Ansätze 34und 36.

Die Funktion der beschriebenen Anordnung ist wie folgt:

Wenn die Welle 42 vom Elektromotor 44 mit einer Drehzahl ω angetrieben wird, wird diese Umdrehung entsprechend den unterschiedlichen Durchmessern der Reibräder 46 und 48 in unterschiedliche, jedoch gleich gerichtete Geschwindigkeiten der Keilbauteile 10 und 12 umgewandelt. Das Keilbauteil 10 bewegt sich jeweils mit einer Geschwindigkeit u1, die entsprechend den unterschiedlichen Durchmessern größer ist als die Geschwindigkeit u2 des Keilbauteils 12. Wenn sich die Welle 42 in Gegenuhrzeigerrichtung dreht, nimmt der Abstand zwischen den Schrägflächen 21 und 22 zu, so dass sich das Abtriebsbauteil 14 gemäß Fig. 1 nach links und abwärts bewegt, wohingegen bei einer Drehung der Welle 42 in Uhrzeigerrichtung der Abstand zwischen den Schrägflächen 21 und 22 abnimmt und sich das Abtriebsbauteil 14 nach rechts und oben bewegt. Die senkrechte Komponente der Bewegung des Abtriebsbauteils 14 wird vom Abtriebsglied 30 aufgenommen, so dass sich dieses infolge seiner Führung an den Führungen 32 unter Gleiten auf der Oberfläche des Abtriebsbauteils 14 nach unten oder oben bewegt. Je nach Winkel der Schrägflächen und Unterschied zwischen den Durchmessern der Reibräder 46 und 48 wird die Drehung des Elektromotors 44 in unterschiedlicher Übersetzung in eine Hubbewegung des Abtriebgliedes 30 umgesetzt, die unmittelbar zur Betätigung beispielsweise eines Kupplungshebels verwendet werden kann. Wie unmittelbar ersichtlich, erfolgt bei gleichen Durchmessern der Reibräder 46 und 48 keine Relativbewegung der Keilbauteile 10 und 12 zueinander, so dass keine Hubbewegung des Abtriebsgliedes 30 erfolgt.

Es versteht sich, dass die Schrägflächen in den aufeinander gleitenden Bereichen und die sonstigen Oberflächen, die auf anderen Oberflächen gleiten, aus reibungsgünstigem Material gebildet oder damit beschichtet sein können. Der Neigungswinkel der Schrägflächen ist vorteilhafterweise derart gewählt, dass die Übertragung der Drehung der Welle 42 in eine Hubbewegung des Abtriebsgliedes 30 selbsthemmend ist, d.h. eine auf das Abtriebsglied 30 senkrecht wirkende Druckkraft nicht zu einer Drehung des Elektromotors 44 führt, selbst wenn sich dieser in einem Freilaufzustand befindet.

Anstelle der Reibpaarungen zwischen den Reibrädern und den zugehörigen Oberflächen der Ansätze können auch Zahnräder für Paarungen vorgesehen sein.

In der perspektivischen Darstellung der Fig. 2 fehlt zur Verdeutlichung des Antriebs der Keilbauteile 10 und 12 das Abtriebsbauteil 14 sowie das Abtriebsglied 30 mit seinen Führungen 32.

Es versteht sich, dass die Keilbauteile mit ihren Ansätzen derart ineinander greifend ausgeführt sein können, dass sich die Schrägflächen 21 und 22 ohne seitlichen Versatz gegenüberliegen.

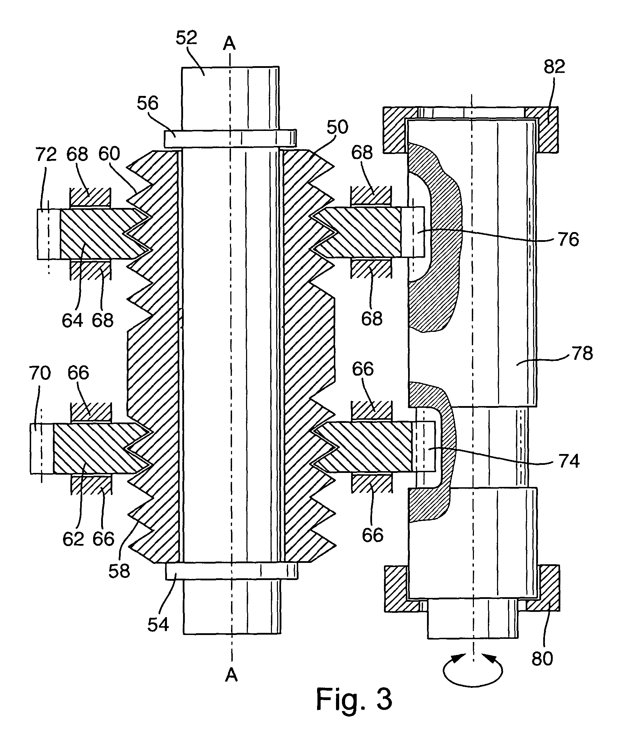

Fig. 3 zeigt einen Schnitt durch eine weitere Ausführungsform eines erfindungsgemäßen Differenzgetriebes, im dargestellten Beispiel als Spindeldifferenzgetriebe:

Gemäß Fig. 3 ist eine Spindel 50, die im Sinne des Hauptanspruchs ein Abtriebsbauteil bildet, hohl ausgeführt und auf einem zylindrischem Bauteil 52 drehbar und infolge von an dem zylindrischen Bauteil 52 ausgebildeten Flanschen 54 und 56 axial relativ zu dem Bauteil 52 unverrückbar gelagert. Das Bauteil 52, das, wie später erläutert wird, ein Abtriebsglied bildet, ist längs der Linie A-A, die gleichzeitig die Drehachse der Spindel 50 bildet, axial verschiebbar in nicht dargestellten Führungen gehalten.

Die Spindel 50 weist einen gemäß Fig. 3 unteren Gewindebereich 58 und einen oberen Gewindebereich 60 auf. Mit jedem Gewindebereich ist ein Innengewinde einer entsprechenden Mutter 62 bzw. 64 in Eingriff, wobei jede der Muttern 62 und 64 in einer gehäusefesten Führung 66 bzw. 68 axial unverschiebbar geführt ist.

Der rechts- und linksgängige Bereich des Gewindes der Spindel 50 kann sich auch überlagern.

Das Innengewinde der Mutter 62 ist beispielsweise rechtsgängig und in Eingriff mit dem rechtsgängig ausgebildeten Gewindebereich 58. Das Innengewinde der Mutter 64 ist linksgängig und in Eingriff mit dem linksgängig ausgebildeten Gewindebereich 60. Die Steigungen der Gewinde können dabei gleich sein. Insgesamt bilden die Gewinde Schrägflächen, über die sich die Muttern und die Spindel aneinander abstützen.

Die Muttern 62 und 64 sind an ihrem Außenumfang mit Verzahnungen 70 bzw. 72 versehen, wobei die Wirkdurchmesser der Muttern unterschiedlich sind. Im dargestellten Beispiel ist der Wirkdurchmesser der Verzahnung der Mutter 62 größer als der der Mutter 64.

Die Verzahnungen 70 bzw. 72 der Muttern 62 bzw. 64 sind in Eingriff mit entsprechenden Verzahnungen 74 bzw. 76, die mit entsprechendem unterschiedlichen Durchmesser an einer Welle 78 ausgebildet sind, die in gehäusefesten Lagern 80 und 82 um eine zur Achse A-A parallele Achse B-B drehbar und axial im wesentlichen unverschiebbar gelagert ist. Die Welle 78 ist mittels eines in Fig. 3 nicht dargestellten Elektromotors drehantreibbar.

Die Funktion der beschriebenen Anordnung ist wie folgt:

Unter der Annahme, die Durchmesser der in Eingriff befindlichen Verzahnungen wären konstant, dann würden die Muttern 62 und 64 von der Welle 78 mit gleicher Drehzahl und im gleichen Drehsinn angetrieben. Durch die Wahl der Gängigkeiten der miteinander in Eingriff befindlichen Gewinde wird die Spindel 50 zwar in einer resultierenden Richtung drehangetrieben, macht jedoch keine axiale Bewegung. Infolge des dargestellten Unterschiedes zwischen den Wirkdurchmessem der Muttern werden diese mit unterschiedlicher Drehzahl angetrieben, was dazu führt, dass die Spindel 50 zusätzlich zur Drehbewegung eine Hubbewegung ausführt, deren Richtung sich mit Umkehr der Drehrichtung der Welle 78 umkehrt. Die Übersetzung zwischen der Drehzahl der Welle 78 und dem Hub der mit der Drehbewegung gekoppelten Hubbewegung der Spindel 50, die sich auf das Bauteil 52 als reine Hubbewegung überträgt, ist vom Drehzahlunterschied der Muttern 62 und 64 und von den Steigungen der Gewinde abhängig.

Es versteht sich, dass es unterschiedlichste Möglichkeiten gibt, die Muttern mittels eines Elektromotors mit unterschiedlicher Drehzahl anzutreiben und dass in Fig. 3 nur eine besonders einfache Möglichkeit dargestellt ist. Weiter gibt es für die Gängigkeiten der miteinander in Eingriff befindlichen Gewinde der Muttern und der Spindel unterschiedlichste Möglichkeiten, mit denen erreichbar ist, dass bei gleicher Drehzahl der Muttern sich die Spindel nur dreht und dass bei unterschiedlicher Drehzahl der Muttern sich der Drehung der Spindel eine Hubbewegung überlagert.

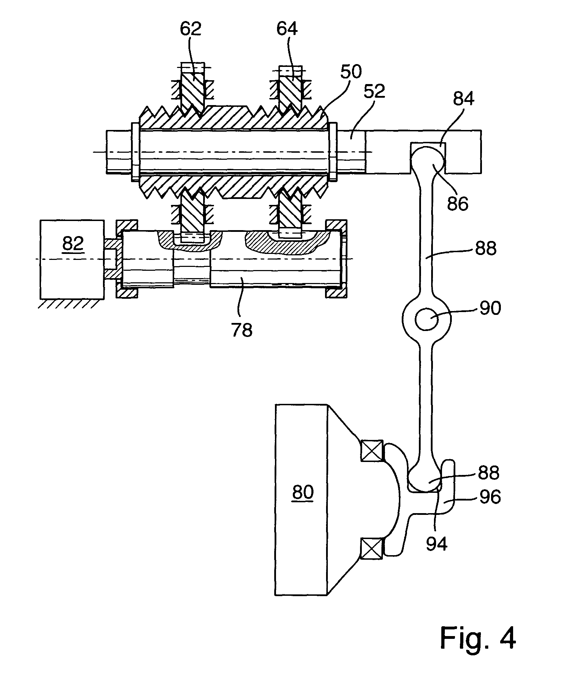

Fig. 4 zeigt ein Beispiel des Einsatzes des Spindeldifferenzgetriebes gemäß Fig. 3 zum Betätigen einer Kupplung 80.

Das in nicht dargestellten gehäusefesten Führungen unverdrehbar und linear beweglich geführte Bauteil 52, das ein Abgriffsglied des Spindeldifferenzgetriebes darstellt, weist an einem Ende eine Ausnehmung 84 auf, in die ein Kopf 86 eines zweiarmigen Hebels 88 einragt, der in einem gehäusefestern Lager 90 um eine im dargestellten Beispiel senkrecht zur Papierebene verlaufende Achse schwenkbar gelagert ist. Ein am anderen Ende des Hebels ausgebildeter Kopf 92 greift in eine Ausnehmung 94 ein, die an einem Betätigungsglied 96 der Kupplung 80 ausgebildet ist. Je nach Drehrichtung des Elektromotors 82 wird dessen Drehung mit großer Übersetzung in eine Linearbewegung des Bauteils 52 und von dort in eine Schwenkbewegung des Hebels 98 in die eine oder andere Richtung übertragen, so dass die Kupplung 80 betätigt werden kann.

Da die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärungen zu machen. Sie können weiterhin auch selbstständige Erfindungen enthalten, die eine von den Gegenständen der vorhergehenden Unteransprüche unabhängige Gestaltung aufweisen.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen und/oder Materialien, die zum Beispiel durch Kombination oder Abwandlung von einzelnen in Verbindung mit den in der allgemeinen Beschreibung und Ausführungsformen sowie den Ansprüchen beschriebenen und in den Zeichnungen enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Herstell-, Prüf- und Arbeitsverfahren betreffen.

### Bezugszeichenliste

- 10: Keilbauteil
- 12: Keilbauteil
- 14: Abtriebsbauteil
- 16: Basis
- 18: Führung
- 20: Führung
- 21: Schrägfläche
- 22: Schrägfläche
- 24: Schrägfläche
- 26: Schrägfläche
- 28: Schrägfläche
- 30: Abtriebsglied
- 32: Führung
- 34: Ansatz
- 35: ebene Oberseite des Ansatzes 34
- 36: Ansatz
- 37: ebene Oberseite des Ansatzes 36
- 38: Konsole
- 40: Konsole
- 42: Welle
- 44: Elektromotor
- 46: Reibrad
- 48: Reibrad
- 50: Spindel
- 52: Bauteil
- 54: Flansch
- 56: Flansch
- 58: Gewindebereich
- 60: Gewindebereich
- 62: Mutter
- 64: Mutter
- 66: Führung
- 68: Führung
- 70: Verzahnung
- 72: Verzahnung
- 74: Verzahnung
- 76: Verzahnung
- 78: Welle

- 80: Kupplung

- 82: Elektromotor
- 84: Ausnehmung
- 86: Kopf
- 88: Hebel
- 90: Lager
- 92: Kopf
- 94: Ausnehmung
- 96: Betätigungsglied

## Patentansprüche

1. Differenzgetriebe, enthaltend
eine Antriebseinrichtung (38, 46, 48; 78),
wenigstens jeweils zwei Zwischenglieder (10, 12 und 62, 64) und
ein Abtriebsbauteil (14; 50), wobei sich das Abtriebsbauteil (14; 50) über Schrägflächen (21, 22, 24, 26, 28) an den Zwischengliedern (10, 12 und 62, 64) abstützt, bei gleicher Bewegungsrichtung der Zwischenglieder (10, 12 und 62, 64) mittels der Antriebseinrichtung (38, 46, 48; 78) eine erste Bewegung ausführt und bei unterschiedlicher Geschwindigkeit der Zwischenglieder (10, 12 und 62, 64) mittels der Antriebseinrichtung (38, 46, 48; 78) eine der ersten überlagerte zweite Bewegung ausführt.

2. Differenzgetriebe nach Anspruch 1, wobei mindestens eines der beiden Zwischenglieder (10, 12 und 62, 64) oder die Antriebseinrichtung (38, 46, 48; 78) antreibbar ist.

3. Differenzgetriebe nach Anspruch 1, wobei die Zwischenglieder (10, 12) in gleicher Richtung linear beweglich geführt sind und sich das Abtriebsbauteil (30) über die Schrägflächen (21, 22, 26, 28) an den Zwischengliedern (10, 12) derart abstützt, dass es einer mit gleicher Geschwindigkeit und in gleicher Richtung erfolgenden Bewegung der Zwischenglieder (10, 12) mit gleicher Geschwindigkeit und Richtung folgt und sich bei ungleicher Geschwindigkeit der sich in gleiche Richtung bewegenden Zwischenglieder (10, 12) mit einer zur Bewegungsrichtung der Zwischenglieder (10, 12) parallelen und einer dazu senkrechten Komponente bewegt und die Antriebseinrichtung (38, 46, 48) derart ausgebildet ist, dass die Zwischenglieder (10, 12) in gleicher Richtung und mit unterschiedlicher Geschwindigkeit bewegbar sind.

4. Differenzgetriebe nach Anspruch 3, wobei die Schrägflächen (21, 22) der Zwischenglieder (10, 12) symmetrisch oder asymmetrisch zu einer senkrecht auf ihrer Bewegbarkeitsrichtung stehenden Geraden angeordnet sind und einander zugewandte Keilflächen bilden, an denen entsprechende Schrägflächen (26, 28) des Abtriebbauteils (14) anliegen, so dass sich das Abtriebbauteil (14) bei einer Abstandsänderung der Keilflächen der Zwischenglieder (10, 12) mit einer Komponente senkrecht zu deren Bewegungsrichtung bewegt.

5. Differenzkeilgetriebe nach Anspruch 3, wobei die Zwischenglieder (10, 12,) bezogen auf ihre Bewegbarkeitsrichtung, nebeneinander angeordnete Eingriffsflächen (35, 37) aufweisen, die mittels der Antriebseinrichtung (38, 46, 48) in gleicher Richtung und mit unterschiedlicher Geschwindigkeit antreibbar sind.

6. Differenzgetriebe nach Anspruch 5, wobei die Eingriffsflächen (35, 37) mit unterschiedlichem Durchmesser ausgebildeten Umfangsflächen (46, 48) einer drehantreibbaren Welle (38) in Eingriff stehen.

7. Differenzgetriebe nach Anspruch 3, wobei das Abtriebsglied (30) die Bewegung des Abtriebsbauteils (14) senkrecht zur Bewegbarkeitsrichtung der Zwischenglieder (10, 12) abtastet.

8. Differenzgetriebe nach Anspruch 1, wobei das Abtriebsbauteil durch eine um eine Achse (A-A) drehbar gelagerte und in Achsrichtung bewegliche Spindel (50) mit einem äußeren Spindelgewinde (58, 60) gebildet wird,
die Zwischenglieder durch zwei axial beabstandete, in ihrer axialen Position festgelegte Muttern (62, 64) mit Innengewinden, die mit dem Spindelgewinde (58, 60) in Eingriff stehen, gebildet sind und
die Antriebseinrichtung (78) ist zum Drehantrieb der Muttern (62, 64) ausgebildet, wobei die mit unterschiedlicher Gängigkeit der in Eingriff stehenden Gewindepaarungen von Mutter (62, 64) und Spindel (50) die Spindel (50) sich bei gleichem Antrieb durch die Muttern (62, 64) nur dreht und bei ungleichem Antrieb dreht und axial verschiebt.

9. Differenzgetriebe nach Anspruch 8, wobei die Gängigkeiten von Bereichen des Spindelgewindes (58, 60), die mit jeweils einem Innengewinde einer Mutter (62, 64) in Eingriff stehen, gegensinnig sind, und die Gängigkeiten der Innengewinde der Muttern (62, 64) gegensinnig sind, und zwischen rechts- und linksgängigem Gewinde unterschiedliche Steigungen vorgesehen sind und die Antriebseinrichtung (78) die Muttern (62, 64) mit unterschiedlichen Drehzahlen antreibt.

10. Differenzgetriebe nach Anspruch 9, wobei die Muttern (62, 64) unterschiedliche Außendurchmesser aufweisen und an ihren äußeren Umfangsflächen mit Verzahnungen (70, 72) versehen sind, die mit Verzahnungen (74, 76) kämmen, die mit unterschiedlichem Durchmesser am Außenumfang einer Welle (78) ausgebildet sind, wobei die Welle (78) um eine zur Achse der Spindel (50) parallele Achse drehantreibbar ist.

11. Differenzgetriebe nach Anspruch 8, wobei die Spindel (50) hohl ist und an einem sie durchdringenden, linear beweglich geführten Abtriebsglied (52) drehbar und axial unverschiebbar gehalten ist.

12. Differenzgetriebe nach Anspruch 8, wobei die Antriebseinrichtung (78) ein Koppelement für die Zwischenglieder (62,64) bildet.

13. Differenzgetriebe nach Anspruch 9, wobei die Welle (78) auch als Hohlrad ausbildet sein kann.
